# EUROPÄISCHE PATENTSCHRIFT

(11) **EP 1 119 589 B1**
(45) Veröffentlichungstag und Bekanntmachung des Hinweises auf die Patenterteilung: **17.12.2003**
(21) Anmeldenummer: 99953765.7
(22) Anmeldetag: 11.10.1999
(51) Int. Cl.: C08K 9/06, C08G 77/14, C09D 4/00

(54) **SCHICHTWERKSTOFF UND VERFAHREN ZUM HERSTELLEN EINES SOLCHEN**
STRATIFIED MATERIAL AND A METHOD FOR PRODUCING THE SAME
MATERIAU STRATIFIE ET SON PROCEDE DE PRODUCTION

(30) Priorität: 09.10.1998 DE 19846659
(43) Veröffentlichungstag der Anmeldung: 01.08.2001
(73) Patentinhaber: WKP Württembergische Kunststoffplatten-Werke GmbH & Co. KG, 72669 Unterensingen (DE)
(72) Erfinder: MEHNERT, Reiner, D-04416 Markkleeberg (DE); GLÄSEL, Hans-Jürgen, D-04229 Leipzig (DE); HARTMANN, Eberhard, D-04509 Priester (DE); HALLER, Heinz, D-73207 Plochingen (DE); SCHWARZ, Bernhard, D-73230 Kirchheim (DE)
(74) Vertreter: Behrmann, Niels, Dipl.-Ing.
(86) Internationale Anmeldenummer: EP9907591
(87) Internationale Veröffentlichungsnummer: WO00022039

(56) Entgegenhaltungen:
- EP-A- 0 486 469
- WO-A-98/51747
- WO-A-99/52964
- DE-A- 19 540 623
- US-A- 5 780 525

## Beschreibung

Die vorliegende Erfindung betrifft einen Schichtwerkstoff nach dem Oberbegriff des Patentanspruchs 1, ein Verfahren zum Herstellen eines platten- oder bahnförmigen, beschichteten Trägermaterials sowie eine Verwendung eines modifizierten Kunstharzes zur Oberflächenbeschichtung eines Trägermaterials.

Gattungsgemäße Schichtwerkstoffe, beispielsweise in Form von sog. dekorativen Hochdruck-Schichtpressstoffplatten (DIN 16926), kunststoffbeschichteten, dekorativen Holzfaserplatten (DIN 68751) oder kunststoffbeschichteten, dekorativen Flachpressplatten nach DIN 68765 finden im Alltag breite Anwendungsbereiche. Gerade mittels Kunststoff oberflächenbeschichtete Spanplatten sind ein bevorzugter Werkstoff beispielsweise für die Möbelindustrie, um dort Produkte herzustellen, die hinsichtlich Kratz- und Abriebfestigkeit belastbar sind und so etwa als Küchenmöbel eingesetzt werden können. Noch höhere Anforderungen an die Belastbarkeit einer Oberfläche entstehen etwa bei Beschichtungen für Fußbodenmaterialien.

Aus dem Stand der Technik ist es bekannt, derartige Beschichtungen, insbesondere in Folienform zur späteren Laminierung mit einem unterliegenden Trägermaterial, als Papier- oder Kunststofffolie zu realisieren, die mit einer Schicht aus einem flüssigen Acrylat beschichtet und nachfolgend durch Elektronenstrahl- oder UV-Härtung durchgehärtet sind. Auch wenn diese bekannten Schichten bereits eine für die skizzierten Anwendungen oftmals bereits ausreichende Oberflächenhärte bzw. Kratzfestigkeit besitzen, so ist insbesondere für stark kratzbelastete Oberflächen eines Endproduktes die so erreichbare Kratzfestigkeit oftmals jedoch noch nicht ausreichend. Darüber hinaus konnte etwa bei konventionell beschichteten Spanplatten der nachteilige Effekt beobachtet werden, dass bei noch warmer Oberflächenbeschichtung einer in der beschriebenen Weise beschichteten Platte diese bereits durch einzelne Spanplattenpartikel beim Aufeinanderstapeln mehrerer Platten zum Verkratzen neigen, so dass hier -- insbesondere bei Großserienfertigung und hohen Fertigungsgeschwindigkeiten -- Beeinträchtigungen der Oberflächenqualität in für einen Kunden sichtbarer und störender Weise auftreten; es ist zu berücksichtigen, dass in der industriellen Fertigung eine Oberflächenbeschichtung von Folien mit Bahngeschwindigkeiten oberhalb von 100 m/min. erfolgt, während die Beschichtung von Holzträgerwerkstoffen mit derartig beschichteten Folien Geschwindigkeiten von bis zu 40 m/min. erreicht.

Aufgabe der vorliegenden Erfindung ist es daher, einen gattungsgemäßen Schichtwerkstoff dahingehend weiterzuentwickeln, dass seine Beschichtung hinsichtlich Kratzfestigkeit und/oder Abriebfestigkeit verbessert ist, und insbesondere auch der so verbesserte Schichtwerkstoff mit hohen Produktions- bzw. Bahngeschwindigkeiten herstellbar ist. Ferner ist ein Herstellungsverfahren für einen solchen Schichtwerkstoff zu schaffen.

Die Aufgabe wird durch den Schichtwerkstoff mit den Merkmalen der Patenansprüche 1 sowie 4, das Verfahren mit den Schritten des Patenanspruchs 10 sowie die Verwendung nach dem Patentanspruch 14 gelöst.

In vorteilhafter Weise bewirkt ein erfindungsgemäß modifiziertes Acrylharz, dass die damit erreichbare Beschichtungsoberfläche nach dem Strahlungshärten gegenüber dem unmodifizierten Acrylat in ihrer Kratzfestigkeit bei Kratzbeanspruchung deutlich erhöht ist. Bezogen wird dieses Maß für Kratzfestigkeit auf die DIN 53799 mit dem dort in Abschnitt 4.15 angegebenen Vorgehen für das Ermitteln des Verhaltens bei Kratzbeanspruchung.

Im Rahmen der Erfindung erfolgt die Herstellung der Nanopartikel ausgehend von Siliciumdioxid in fester, feinteiliger Form mit einer Teilchengröße im Bereich von 1 bis 500 nm. Ein derartiges Siliciumdioxid ist im Handel erhältlich, z.B. als Aerosil® der Degussa AG, Frankfurt, DE, oder Cabo-sil der Cabot Corp., Boston, Mass., USA.

Die Siliciumpartikel weisen an der Oberfläche Hydroxylgruppen auf. Die Anbindung der Seitenketten erfolgt über diese Hydroxylgruppen durch Umsetzung zu (MeO)ₓ(Me-(CH₂)ₙ-(OCO)ₘ-CR¹=CH₂)_{y} bzw. (MeO)ₓMe(CH₂)ₙOCOCR¹=CH₂, wobei MeO, x, Me, m, n, y und R¹ die im Anspruch 1 angegebenen Bedeutungen besitzen und die freien Valenzen von Me durch Alkoxyreste abgesättigt sind, in Gegenwart starker Säuren, wie Schwefelsäure, Phosphorsäure, Methansulfonsäure oder p-Toluolsulfonsäure. Man verwendet im allgemeinen 1 bis 10 Gew.-% der starken Säure, bezogen auf die Menge an Siliciumdioxid. Die Reaktionstemperatur liegt im allgemeinen bei 30 bis 80°C. Nach beendeter Reaktion wird die starke Säure mit einer Base neutralisiert. Falls der Einbau von (MeO)ₓ erwünscht ist, führt man die Umsetzung in Anwesenheit der entsprechenden Me-Alkoxy-Verbindung, z.B. Tetramethoxysilan oder Al-isopropylat, durch.

Im Rahmen der Erfindung ist zudem ein Substrat nicht auf die in der DIN 53799 explizit genannten Werkstoffe beschränkt, sondern im Grundsatz sind insbesondere auch (bevorzugt bahnförmige) Kunststofffolien und Papiere als solches Substrat zu verstehen, die dann mit einer herkömmlichen Beschichtungsdicke, abhängig von einem gewünschten Einsatzzweck, versehen werden.

Als ein durch nanoskalige Kieselsäure modifiziertes Acrylat gemäß einer unabhängigen Realisierung der Erfindung ist jegliche chemische Verbindung zu verstehen, die durch die allgemeinen Strukturen 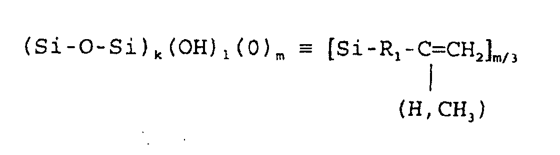 und 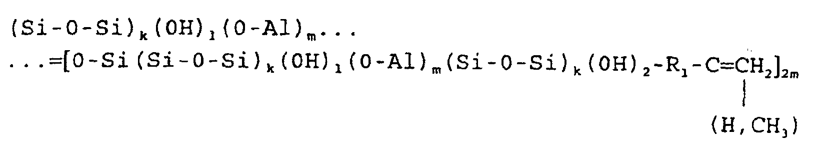 charakterisiert sind, wobei (Si-O-Si)ₖ(OH)ₗ nanoskalige Kieselsäurepartikel sind, die über Si-O-Si und/oder Si-O-Al-Bindungen an eine Acrylat- und/oder Methacrylatfunktionalität angebunden sind, und wobei 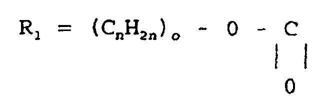 als eine Spacergruppe fungiert.

Auch ist als Strahlung im Rahmen der Erfindung jegliche, für eine strahlenchemische Härtung des Beschichtungsmaterials geeignete Strahlung, beispielsweise Elektronenstrahlung oder UV-Strahlung, umfasst, wobei mittels ansonsten bekannter Maßnahmen die Härtungskinetik geeignet eingestellt wird, im Fall eines verwendeten UV-Strahlers etwa durch geeignete Zugabe von Photoinitiatoren.

In erfindungsgemäß vorteilhafter Weise kann im Ergebnis eine Oberflächenbeschichtung erhalten werden, die gegenüber dem unmodifizierten Acrylat üblicherweise um mindestens 50% höhere Werte für Kratzfestigkeit aufweist, ohne dass jedoch die ansonsten auch anzuwendenden großserientauglichen Beschichtungsvorgänge bzw. -verfahren modifiziert werden müssten oder aber in ihrer Leistungsfähigkeit beeinträchtigt wären. Vielmehr ermöglicht es das erfindungsgemäß eingesetzte, durch polymerisierbare Nanopartikel modifizierte Acrylat (NKMA), den flüssigen modifizierten Beschichtungswerkstoff in analoger Weise insbesondere auf konventionellen Beschichtungsanlagen praktisch ohne Umbauten einzusetzen, so dass darüber hinaus auch ein Umstieg auf die erfindungsgemäße Technologie herstellungstechnisch günstig und mit wenig Aufwand verbunden ist.

Vorteilhafte Weiterbildungen der Erfindung sind in den Unteransprüchen beschrieben.

So läßt sich die erzielbare Oberflächenhärte der erfindungsgemäß modifizierten, polymerisierten Beschichtungsoberfläche, neben DIN 53799 zusätzlich durch signifikant erhöhte Härtewerte gemäß DIN 55350 bzw. Härteprüfung nach Erichsen (Prüfstab 318) charakterisieren.

Erfindungsgemäß zu beschichtende Kunststofffolien weisen bevorzugt Schichtdicken zwischen 40 und 300 µm auf, während im Rahmen der Erfindung zu beschichtende Papiere besonders bevorzugt Gewichte zwischen 30 und 90 g/m² aufweisen. Je nach Anwendungszweck liegen besonders bevorzugte Schichtdicken der erfindungsgemäß aufgebrachten Beschichtung zwischen 10 und 200 µm.

Gemäß einer bevorzugten Weiterbildung der Erfindung ist vorgesehen, dass vor dem Strahlungshärten die Beschichtungsoberfläche durch UV-Bestrahlung, insbesondere mit Wellenlängen von 172 nm bzw. 222 nm, photoinitiatorfrei mattiert wird. So hat sich vorteilhaft herausgestellt, dass eine Bestrahlung der flüssigen, modifizierten Acrylat-Beschichtung mit Photonen der genannten Wellenlängen (ausgestrahlt von sog. Excimer-Lampen) unter Inertgas eine eine Mattierung herbeiführende, charakteristische Oberflächenverfestigung bewirkt.

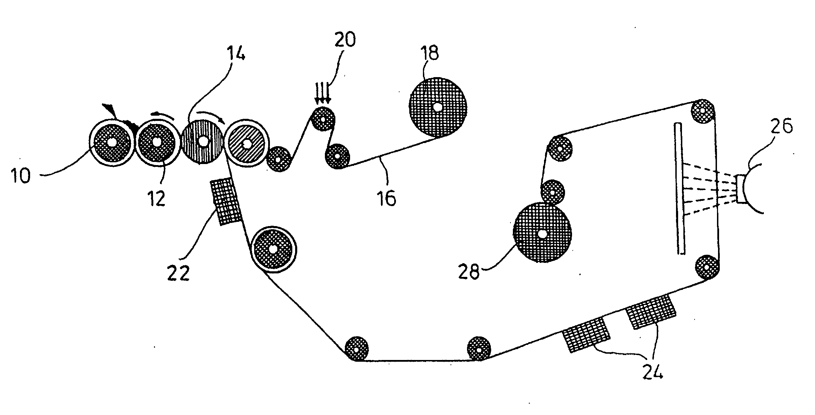

Weitere Vorteile, Merkmale und Einzelheiten der Erfindung ergeben sich aus der nachfolgenden Beschreibung bevorzugter Ausführungsbeispiele sowie anhand der Figur; diese verdeutlicht schematisch den Aufbau einer möglichen Beschichtungsanlage zum Aufbringen erfindungsgemäß modifizierter Acrylate mit zusätzlicher UV-Mattierung vor einem Elektronenstrahlhärten.

### Beispiel 1:

Es wird eine NKMA-Acrylatformulierung hergestellt, in dem in einem Rührgefäß 25 kg Sartomer 494 (Ethoxyliertes Pentaerythritol-Tetraacrylat, Hersteller: Cray Valley, Importvertrieb in Deutschland über CRAY VALLEY Kunstharz GmbH, D-47918 Tönisvorst) als Präpolymer vorgelegt und auf 80°C erwärmt wird. Diesem wird bei dieser Temperatur unter intensivem Rühren Kieselsäure TT 600 (amorphe SiO₂-Nanopartikel, Degussa) sowie DYNASYLAN MEMO (3-Methacryloxypropyl-Trimethoxysilan, Hersteller: SIVENTO Chemie GmbH) im Massenverhältnis 1,4:1 in Teilmengen alternierend zugegeben, bis ein Gesamtanteil von 7 kg TT 600 und 5 kg DYNASYLAN MEMO im Ansatz vorliegt. Danach wird unter fortwährendem, intensivem Rühren bei 80°C so schnell wie möglich 3 kg 97%iges Aluminiumisopropylat dosiert; nach weiteren 15 Minuten erfolgt die Zugabe eines Gemisches von 1,95 kg Wasser, 0,368 kg 30%iger wässriger Natriumdodecylsulfat- Lösung sowie 0,2 kg 70%iger wässriger Methansulfonsäure innerhalb von 0,25 Stunden. Das Gemisch wird noch etwa eine Stunde bei 80°C nachgerührt, und danach wird der Ansatz schnellstmöglich auf Raumtemperatur für die Beschichtungsverarbeitung abgekühlt.

Die Beschichtung erfolgt auf einer Papierbahn mit einem Walzenauftragsverfahren durch eine in der Figur gezeigten Beschichtungsanlage bei einer Bahngeschwindigkeit von 100 m/min.

Mittels Dosierwalze 10, Auftragswalze 12 sowie Gummiwalze 14 wird die NKMA-Acrylat-Mischung mit einem Auftragsgewicht von ca. 10 g/m² auf die Papierbahn 16 (abgerollt von einer Vorratsrolle 18 und vorbereitet durch Coronastrahlung 20) aufgebracht und dann zu Mattierungszwecken entweder unter einem 172 nm Excimer-Strahler 22 oder unter einem Paar von 222 nm Excimer-Strahlern 24 vorbeigeführt. Das Aushärten der mattierten Beschichtung erfolgt mittels eines Elektronenstrahlers 26; das ausgehärtete, beschichtete Substrat wird dann auf eine Produktrolle 28 aufgerollt.

Kratz- und Abriebfestigkeit der so erzeugten Beschichtung wurden dann im Vergleich zu einer unmodifizierten Acrylatmodifizierung, basierend auf Sartomer 494, gemessen, wobei sich die jeweiligen Werte aus der nachfolgenden Tabelle 1 ergeben:

**Tabelle 1:**

| Vergleich modifiziertes Acrylat (Erfindung)vs. unmodifiziertes Acrylat | | |
|---|---|---|
| Prüfung | Produkt | gemessener Wert |
| DIN 53799 (Kratzbeanspruchung) | Sartomer 494 | 3,5 N |
| | Ausführungsbeispiel | 7,5 N |
| Härteprüfung (Erichsen 318) | Sartomer 494 | 3,5 N |
| | Ausführungsbeispiel | 8,0 N |

Die Messung der Kratzbeanspruchung erfolgte dabei unter Einsatz der in der DIN 53799, Fassung Januar 1986, Abschnitt 4.15 vorgesehenen Verfahrensweise; die Prüfung wurde unter Verwendung eines Härteprüfstabs Modell 318 der Firma Erichsen GmbH & Co. KG,D-58675 Hemer, durchgeführt.

In beiden Fällen zeigt sich, dass das erfindungsgemäß modifizierte Acrylat mehr als doppelt so hohe Werte für die Kratzfestigkeit bei Kratzbeanspruchung bzw. die Härteprüfung aufweist, als das unmodifizierte, für herkömmliche Beschichtung bekannte Acrylat.

Damit erweist sich ein in der angegebenen Weise beschichteter Werkstoff als besonders geeignet für Einsatzzwecke und Umgebungen mit hoher Kratzbeanspruchung, wie beispielsweise bei Fußböden oder Arbeitsplatten.

### Beispiel 2:

In einem Rührgefäß werden 33,125 kg EB 952 (UCB-Chemie Kerpen) vorgelegt und auf 80° C erwärmt. Anschließend gibt man bei dieser Temperatur Kieselsäure TT600 und DYNASYLAN MEMO im Massenverhältnis 2:1 in Teilmengen alternierend zu, bis ein Gesamtanteil von 11,25 kg TT600 und 5,625 kg DYNASYLAN MEMO im Ansatz vorliegt. Danach wird unter intensivem Rühren bei 80°C im Verlauf von 75 min ein Gemisch von 1,45 kg Wasser, 0,27 kg SERDET-Lösung (Eurochemie GmbH Mühlheim) und 0,25 kg 70%iger wäßriger Methansulfonsäure zugegeben. Man rührt noch 0,5 h bei 80°C weiter und neutralisiert anschließend die Methansulfonsäure durch 15-minütiges Zutropfen von 150 g 50%iger Natronlauge. Zuletzt wird der Ansatz so schnell wie möglich auf Raumtemperatur abgekühlt.

Die vorliegende Erfindung ist nicht auf die vorstehend geschilderten Ausführungsbeispiele hinsichtlich der Bereitung des Beschichtungsmaterials bzw. Vorgehen bei der Beschichtung beschränkt. So eignen sich grundsätzlich sämtliche vorbekannte Beschichtungsverfahren auch zur Verwendung mit dem erfindungsgemäß modifizierten Acrylat, und Zusammensetzung, chemische Struktur und Bereitung dieses Acrylats im Rahmen der vorliegenden Erfindung umfasst jegliche geeignete strahlenchemisch härtbare, Siloxan-modifizierte Methacrylate.

## Patentansprüche

1. Schichtwerkstoff mit
einem eine einseitig oder beidseitig aufgebrachte Beschichtung aus einem härtbaren Kunstharz auf der Basis von Acrylat-Polymeren aufweisenden planen Substrat,
**dadurch gekennzeichnet, dass**
das Kunstharz lösungsmittelfrei und modifiziert ist mittels hochtemperaturbeständiger, polymerisierbarer Nanopartikel mit einer Glasübergangstemperatur der Homopolymerisate von ≥ 150°C, die einen Kern aus Siliciumdioxid und mindestens eine über ein oder mehrere Sauerstoffatome des Oxids kovalent an den Kern gebundene Seitenkette der Formel
(MeO)ₓ(Me-(CH₂)ₙ-OCOₘ-CR¹ = CH₂)_{y}
aufweisen, worin
Me für Si oder Al steht,
x für 1 bis 3 steht,
m für 0 und 1 steht,
n für 2 bis 6 steht,
y für 1 bis 3 steht und
R¹ für H oder CH₃ steht,
wobei die freien Valenzen von Me eine Bindung an ein weiteres Sauerstoffatom des Kerns darstellen oder durch Alkoxyreste abgesättigt sind.

2. Schichtwerkstoff nach Anspruch 1, **dadurch gekennzeichnet, dass** das Kunstharz ein durch Strahlung polymerisierbares Kunstharz ist.

3. Schichtwerkstoff nach Anspruch 1 oder 2, **dadurch gekennzeichnet, dass** das Kunstharz so modifiziert ist, dass eine polymerisierte Beschichtungsoberfläche bei einer Kratzbeanspruchung von bis zu mindestens 3,5 Newton, bevorzugt bis zu mindestens 4,5 Newton, gemessen nach DIN 53799 (Fassung Januar 1996, Abschnitt 4.15), kratzfest ist.

4. Schichtwerkstoff mit einem eine einseitig oder beidseitig aufgebrachte Beschichtung aus einem durch eine Strahlung polymerisierbaren Kunstharz, bevorzugt einem Acrylat, aufweisenden planen Substrat, **dadurch gekennzeichnet, dass** das Kunstharz lösungsmittelfrei und mittels nanoskaliger Kieselsäure und Silan so modifiziert ist, dass eine polymerisierte Beschichtungsoberfläche bei einer Kratzbeanspruchung von bis zu mindestens 3,5 Newton, bevorzugt bis zu mindestens 4,5 Newton, gemessen nach DIN 53799 (Fassung Januar 1986, Abschnitt 4.15), kratzfest ist.

5. Schichtwerkstoff nach einem der Ansprüche 1 bis 4, **dadurch gekennzeichnet, dass** die Beschichtungsoberfläche eine mit dem Härteprüfstab Erichsen Modell 318 gemessene Härte von höher als 4 Newton aufweist .

6. Schichtwerkstoff nach einem der Ansprüche 1 bis 5, **dadurch gekennzeichnet, dass** das Substrat eine Kunststofffolie einer Dicke im Bereich von zwischen 40 und 300 µm oder Papier eines Gewichts von 30 bis 90 g/m² ist.

7. Schichtwerkstoff nach einem der Ansprüche 1 bis 5, **dadurch gekennzeichnet, dass** das Substrat eine Holzplatte, insbesondere Mehrschicht- oder Spanplatte, für die Herstellung von Möbeln ist.

8. Schichtwerkstoff nach einem der Ansprüche 1 bis 7, **dadurch gekennzeichnet, dass** eine Schichtdicke der Beschichtung zwischen 10 und 200 µm beträgt.

9. Schichtwerkstoff nach einem der Ansprüche 1 bis 8, **dadurch gekennzeichnet, dass** die Beschichtungsoberfläche auf einen Glanzgrad (60°) kleiner 10 mattiert ist, gemessen nach DIN 67530.

10. Verfahren zum Herstellen eines platten- oder bahnförmigen, mit einer kratzfesten Beschichtung versehenen Trägermaterials, insbesondere eines Schichtwerkstoffs nach einem der Ansprüche 1 bis 6, mit den Schritten:
- Bereitstellen eines lösungsmittelfreien, durch Strahlung polymerisierbaren, flüssigen Kunstharzes, bevorzugt eines Acrylats,
- Modifizieren des Kunstharzes mit nanoskaliger Kieselsäure und Silan,
- Auftragen des lösungsmittelfreien, modifizierten Kunstharzes als Beschichtung auf das Trägermaterial und
- Aushärten der Beschichtung, insbesondere durch Bestrahlen.

11. Verfahren nach Anspruch 10, **dadurch gekennzeichnet, dass** vor dem Schritt des Aushärtens die aufgetragene Beschichtung mit Photonen im Wellenlängenbereich zwischen 160 und 230 nm, insbesondere 172 nm oder 222 nm, bestrahlt wird.

12. Verfahren nach Anspruch 11, **dadurch gekennzeichnet, dass** die aufgetragene Beschichtung keine Photoinitiatoren aufweist.

13. Verfahren nach einem der Ansprüche 10 bis 12, **dadurch gekennzeichnet, dass** eine Bahngeschwindigkeit eines kontinuierlichen Beschichtungsprozesses zwischen 50 und 200 m/min., bevorzugt 100 bis 130 m/min., beträgt.

14. Verwendung eines modifizierten Kunstharzes nach einem der Ansprüche 1 bis 9 zur Oberflächenbeschichtung eines platten- oder bahnförmigen Trägermaterials, wobei eine polymerisierte, lösungsmittelfreie Beschichtungsoberfläche bei einer Kratzbeanspruchung von bis zu mindestens 3,5 Newton, bevorzugt bis zu mindestens 4,5 Newton, gemessen nach DIN 53799 (Fassung Januar 1986, Abschnitt 4.15), kratzfest ist.

## Claims

1. Layered material with a flat substrate having a coating applied on one side or both sides made from a curable synthetic resin based on acrylate polymers, **characterised in that** the synthetic resin is solvent-free and modified by means of high temperature-resistant, polymerisable nanoparticles having a glass transition temperature of the homopolymers of ≥ 150°C, which have a core of silicon dioxide and at least one side chain, bound covalently to the core via one or more oxygen atoms of the oxide, of the formula
(MeO)ₓ (Me-(CH₂)ₙ-OCOₘ-CR¹ = CH₂)_{y}
wherein
Me represents Si or Al,
x represents 1 to 3,
m represents 0 and 1,
n represents 2 to 6,
y represents 1 to 3 and
R¹ represents H or CH₃,
wherein the free valencies of Me represent a bond to a further oxygen atom of the core or are saturated by alkoxy radicals.

2. Layered material according to claim 1, **characterised in that** the synthetic resin is a synthetic resin which can be polymerised by radiation.

3. Layered material according to claim 1 or 2, **characterised in that** the synthetic resin is modified so that a polymerised coating surface is scratch-resistant at a scratching stress of up to at least 3.5 Newtons, preferably up to at least 4.5 Newtons, measured according to DIN 53 799 (Version January 1996, Section 4.15).

4. Layered material with a flat substrate having a coating applied on one side or both sides made from a synthetic resin which can be polymerised by radiation, preferably an acrylate, **characterised in that** the synthetic resin is solvent-free and modified by means of nano-scale silicic acid and silane so that a polymerised coating surface is scratch-resistant at a scratching stress of up to at least 3.5 Newtons, preferably up to at least 4.5 Newtons, measured according to DIN 53 799 (Version January 1986, Section 4.15).

5. Layered material according to one of claims 1 to 4, **characterised in that** the coating surface has a hardness of higher than 4 Newtons measured using the Erichsen Model 318 hardness testing rod.

6. Layered material according to one of claims 1 to 5, **characterised in that** the substrate is a plastic film of thickness in the range from between 40 and 300 µm or paper of weight from 30 to 90 g/m².

7. Layered material according to one of claims 1 to 5, **characterised in that** the substrate is a wooden panel, in particular multi-layered panel or chipboard, for the production of furniture.

8. Layered material according to one of claims 1 to 7, **characterised in that** a layer thickness of the coating is between 10 and 200 µm.

9. Layered material according to one of claims 1 to 8, **characterised in that** the coating surface is matted to a degree of gloss (60°) less than 10, measured according to DIN 67 530.

10. Process for producing a panel-like or web-like support material provided with a scratch-resistant coating, in particular a layered material according to one of claims 1 to 6, having the steps:
- provision of a solvent-free liquid synthetic resin which can be polymerised by radiation, preferably an acrylate,
- modification of the synthetic resin using nano-scale silicic acid and silane,
- application of the solvent-free, modified synthetic resin as a coating to the support material and
- curing of the coating, in particular by irradiation.

11. Process according to claim 10, **characterised in that** before the step of curing, the applied coating is irradiated with photons in the wavelength range between 160 and 230 nm, in particular 172 nm or 222 nm.

12. Process according to claim 11, **characterised in that** the applied coating does not have photoinitiators.

13. Process according to one of claims 10 to 12, **characterised in that** a web speed of a continuous coating process is between 50 and 200 m/minute, preferably 100 to 130 m/minute.

14. Use of a modified synthetic resin according to one of claims 1 to 9 for surface coating of a panel-like or web-like support material, wherein a polymerised, solvent-free coating surface is scratch-resistant at a scratching stress of up to at least 3.5 Newtons, preferably up to at least 4.5 Newtons, measured according to DIN 53 799 (Version January 1986, Section 4.15).

## Revendications

1. Matière stratifiée avec un substrat plat présentant un revêtement appliqué unilatéralement ou bilatéralement en résine synthétique durcissable sur la base de polymères d'acrylate,
**caractérisée en ce que**
la résine synthétique est exempte de solvants et modifiée au moyen de nanoparticules polymérisables à haute résistance thermique avec une température de transition vitreuse des homopolymères de ≥ 150°C, qui présentent un noyau en dioxyde de silicium et au moins une chaîne latérale, liée au noyau de manière covalente via un ou plusieurs atomes d'oxygène de l'oxyde de la formule
(MeO) ₓ (Me- (CH₂) ₙ-OCOₘ-CR¹ = CH₂)_{y}
dans laquelle
Me correspond à Si ou Al,
x correspond à 1 à 3,
m correspond à 0 et 1,
n correspond à 2 à 6,
y correspond à 1 à 3 et
R¹ correspond à H ou CH₃,
les valences libres de Me représentant une liaison à un autre atome d'oxygène du noyau ou étant saturées de restes alkoxy.

2. Matière stratifiée selon la revendication 1, **caractérisée en ce que** la résine synthétique est une résine synthétique polymérisable par rayonnement.

3. Matière stratifiée selon la revendication 1 ou 2, **caractérisée en ce que** la résine synthétique est modifiée de telle sorte qu'une surface de revêtement polymérisée est résistante à l'abrasion en présence d'une charge abrasive de jusqu'à 3,5 Newtons au minimum, de préférence jusqu'à 4,5 Newtons au minimum, mesuré conformément à DIN 53799 (version de janvier 1996, paragraphe 4.15).

4. Matière stratifiée avec un substrat plat présentant un revêtement appliqué unilatéralement ou bilatéralement en résine polymérisable par le biais d'un rayonnement, de préférence un acrylate, **caractérisée en ce que** la résine synthétique est exempte de solvants et modifiée au moyen d'acide silicique et de silane nanoscaliques de telle sorte qu'une surface de revêtement polymérisée est résistante à l'abrasion en présence d'une charge abrasive de jusqu'à 3,5 Newtons au minimum, de préférence jusqu'à 4,5 Newtons au minimum, mesuré conformément à DIN 53799 (version de janvier 1986, paragraphe 4.15).

5. Matière stratifiée selon l'une des revendications 1 à 4, **caractérisée en ce que** la surface de revêtement présente une dureté supérieure à 4 Newtons, mesurée à l'aide d'une éprouvette d'essai de dureté Erichsen modèle 318.

6. Matière stratifiée selon l'une des revendications 1 à 5, **caractérisée en ce que** le substrat est une feuille en matière plastique d'une épaisseur située dans une plage allant de 40 à 300 µm ou du papier d'un poids de 30 à 90 g/m².

7. Matière stratifiée selon l'une des revendications 1 à 5, **caractérisée en ce que** le substrat est un panneau en bois, notamment un panneau à plusieurs couches ou panneau de particules, pour la fabrication de meubles.

8. Matière stratifiée selon l'une des revendications 1 à 7, **caractérisée en ce qu'**une épaisseur de couche du revêtement se situe entre 10 et 200 µm.

9. Matière stratifiée selon l'une des revendications 1 à 8, **caractérisée en ce que** la surface de revêtement est matée à un degré de brillance (60°) inférieur à 10, mesuré conformément à DIN 67530.

10. Procédé de fabrication d'un support en forme de panneau ou de bande, pourvu d'un revêtement résistant à l'abrasion, notamment une matière stratifiée selon l'une des revendications 1 à 6, avec les étapes consistant à :
- préparer une résine synthétique liquide, polymérisable par rayonnement, exempte de solvants, de préférence un acrylate,
- modifier la résine synthétique avec de l'acide silicique et du silane nanoscaliques,
- appliquer la résine synthétique modifiée, exempte de solvants, comme revêtement sur le support et
- durcir le revêtement, notamment par irradiation.

11. Procédé selon la revendication 10, **caractérisé en ce qu'**avant l'étape de durcissement, le revêtement appliqué est irradié avec des photons dans une plage de longueurs d'onde entre 160 et 230 nm, notamment 172 nm ou 222 nm.

12. Procédé selon la revendication 11, **caractérisé en ce que** le revêtement appliqué ne présente pas de photoinitiateurs.

13. Procédé selon l'une des revendications 10 à 12, **caractérisé en ce qu'**une vitesse de trajectoire d'un processus de revêtement continu se situe entre 50 et 200 m/min., de préférence 100 à 130 m/min.

14. Utilisation d'une résine synthétique modifiée selon l'une des revendications 1 à 9 pour le revêtement de surface d'un support en forme de panneau ou de bande, une surface de revêtement polymérisée, exempte de solvants, étant résistante à l'abrasion en présence d'une charge abrasive de jusqu'à 3,5 Newtons au minimum, de préférence jusqu'à 4,5 Newtons au minimum, mesuré conformément à DIN 53799 (version de janvier 1986, paragraphe 4.15).
